# EUROPEAN PATENT APPLICATION

(11) **EP 1 482 173 A2**
(43) Date of publication of application: **01.12.2004**
(21) Application number: 04425369.8
(22) Date of filing: 21.05.2004
(51) Int. Cl.: F03G 3/00

(54) **Propulsion unit for vehicles, vessels and the like**

(30) Priority: 28.05.2003 IT FI20030153
(71) Applicant: Calzolari, Rino, I-50145 Firenze (IT)
(72) Inventor: Calzolari, Rino, I-50145 Firenze (IT)
(74) Representative: Mannucci, Michele

(57) **Abstract**

The propulsion unit ― suitable for vehicles, vessels or other applications ― comprises: a structure (1) movable by the effect of a series of thrusts; an element (3) rotating about a fixed column (5) of said movable structure (1); on said element (3) two opposed piston-cylinder engine units (13, 13A), a mass (9) movable by the effect of the active stroke of the piston being connected by means of a step-up to the piston (13A) thereof, to carry out prompt radial strokes with respect to the column (5) and thus produce through reaction a thrust in the direction of displacement of said structure (1).

## Description

The subject of the invention is a propulsion unit for vehicles, vessels or other applications, which essentially comprises a piston/cylinder engine system, associated with a mass movable with respect to the structure of the vehicle, vessel or the like, so that the active stroke of the piston/cylinder system causes a corresponding sudden displacement of said movable mass, the quantity of motion thereof producing by reaction a propulsive thrust on said structure.

More specifically, the propulsion unit in question comprises:
- a structure movable by the effect of a series of thrusts;
- an element positioned in the movable structure and rotating about a fixed column of the fixed structure;
- on said rotating element at least a piston-cylinder engine unit positioned radially with respect to the axis of the fixed column, a mass movable by the effect of the active stroke of the piston being connected to the piston thereof, in order to carry out a prompt amplified radial stroke and produce a thrust in the direction of the displacement of said structure, through the reaction exerted on the cylinder;
- an eccentric connecting rod-crank system, the shaft of which is mounted on said rotating element coaxially to a gear wheel, meshing with a ring gear with the same diameter carried by the fixed column;
- on said gear wheel a drawing projection designed to propel the shaft of the eccentric associated with said connecting rod;
- means to trigger the active stroke of the piston-cylinder system around the top dead center of said system, so that the shaft of the eccentric rotates suddenly anticipating the thrust produced by said projection and the heavy mass carries out the amplified stroke, and the quantity of motion thus produced induces, through the reaction on the cylinder head, a propulsive thrust on said movable structure in the direction of displacement thereof.

Further characteristics of the invention are defined in the dependent claims.

The invention shall now be better understood following the description and accompanying drawing, which shows a non-limiting practical embodiment of the invention. In the drawing:

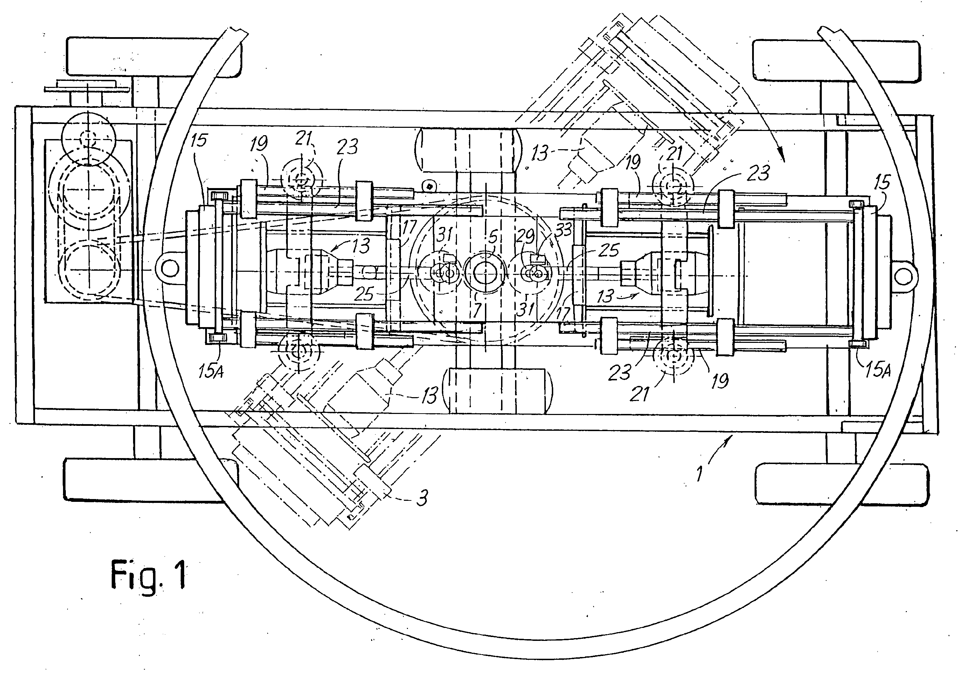

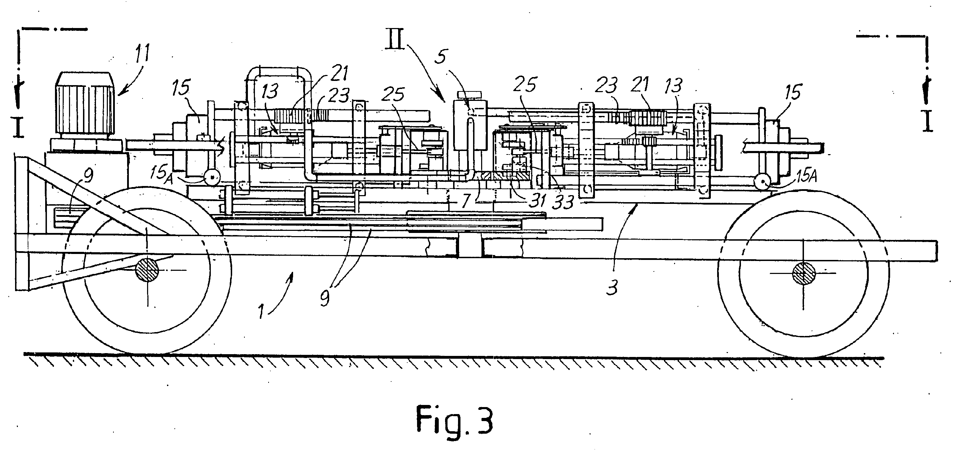

Figure 1 shows an overall plan view according to I-I in Figure 3 of a vehicle provided with a propulsion unit according to the invention;

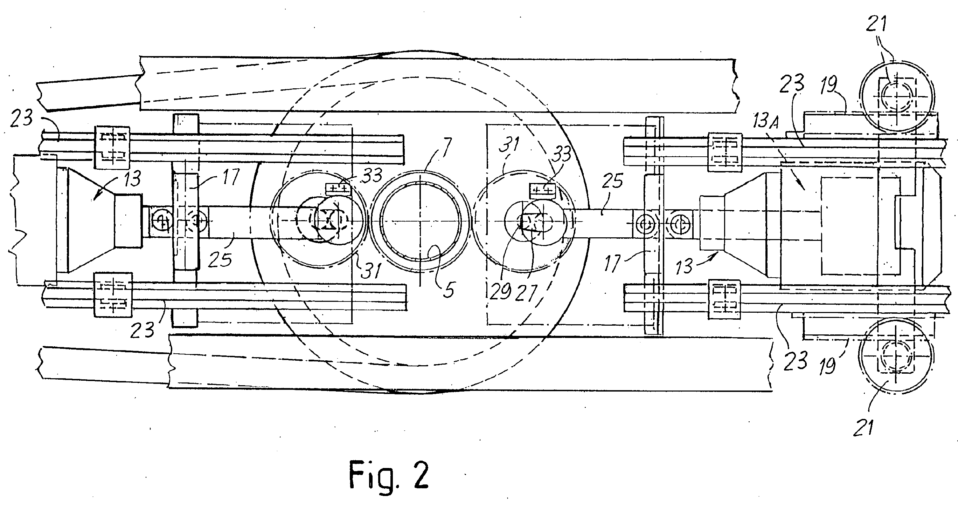

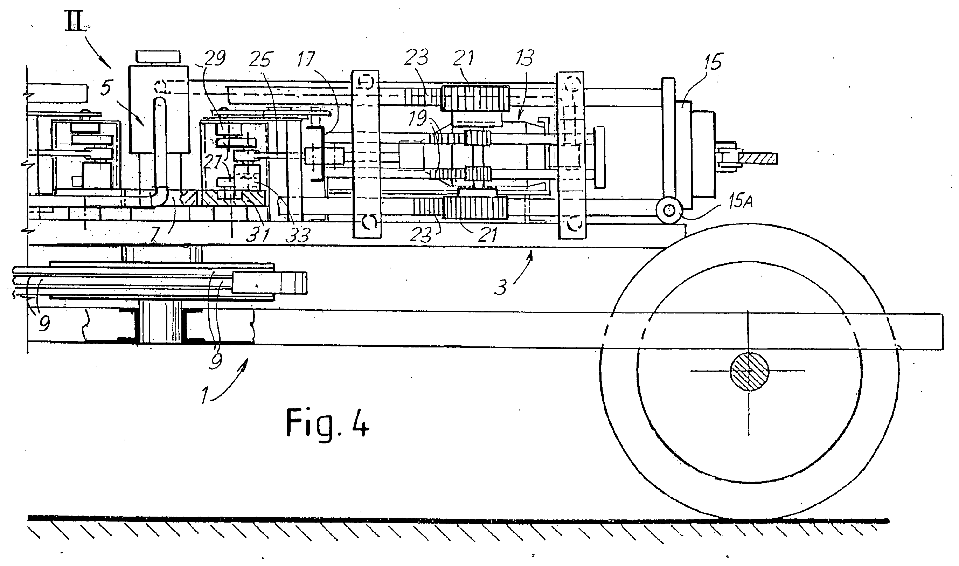

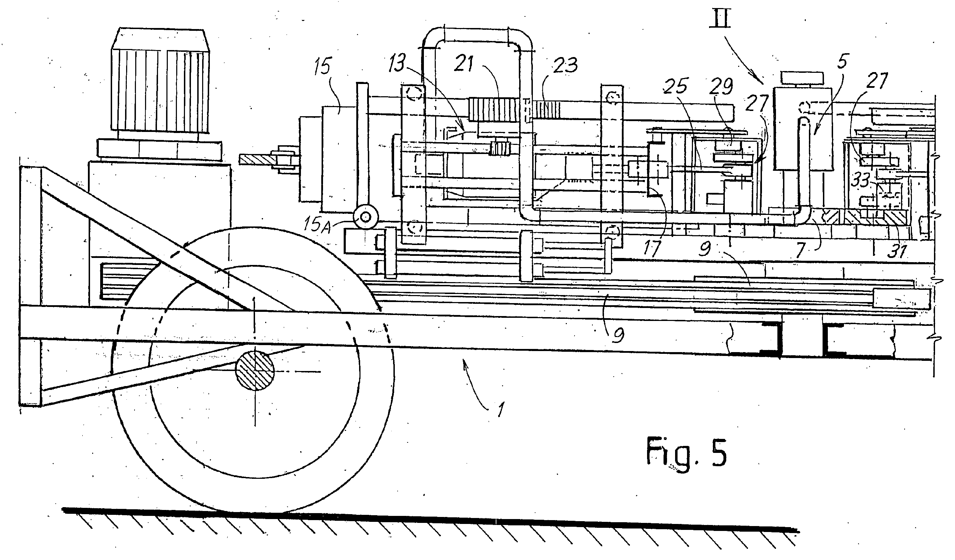

Figure 2 shows an enlarged detail of Figure 1, of the area indicated by the arrow II in Figures 3, 4 and 5;
Figure 3 shows an overall side view;
Figures 4 and 5 show two enlarged areas of Figure 3;

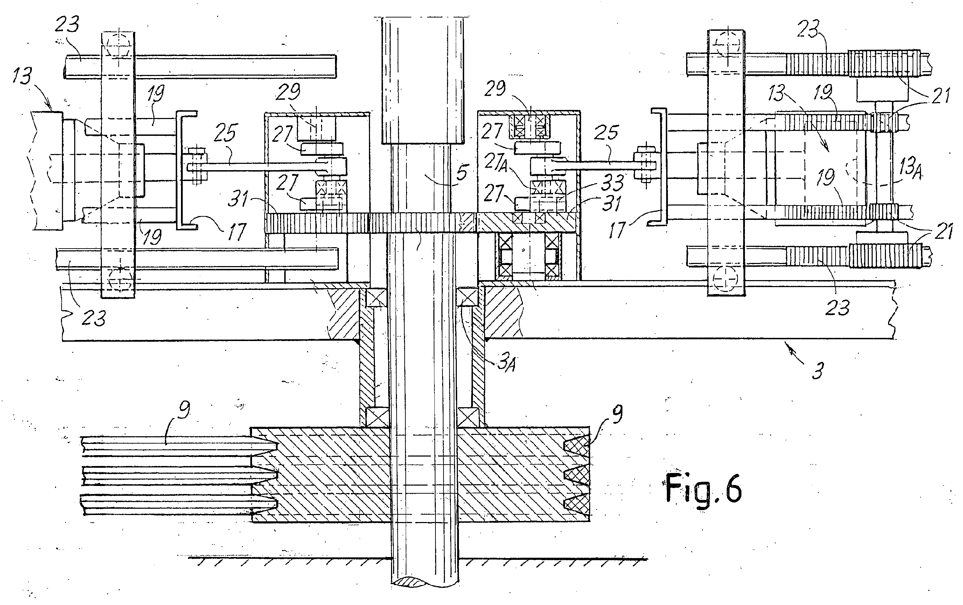

Figure 6 shows a further enlarged detail of Figure 3.

According to what is shown in the drawing, the number 1 indicates a vehicle, which forms the movable structure destined to receive the action of the propulsion unit in question, which acts on the structure of the vehicle 1, by the effect of a series of thrusts.

The propulsion unit comprises an element 3 which is mounted on bearings 3A and which rotates about a fixed column 5 of said movable structure 1 of the vehicle; said column 5 carries a ring gear 7, which is therefore fixed to the structure 1. A belt transmission 9 which receives motion from a gear motor 11 mounted on the structure 1 is provided for rotation of said element 3.

At least one piston-cylinder engine unit 13, 13A is installed on the rotating element 3, which can function as an internal combustion, pneumatic or any other type of engine. Connected to the piston, represented schematically in 13A is a mass 15 which is movable parallel to the axis of the system 13, and which is operated by the effect of the active stroke of the piston 13A. The stroke of the mass 15 is amplified with respect to the stroke of the piston 13A by means of an amplification system, which comprises a cross member 17, a pair of racks 19, two dual step-up gears 21 and a second pair of racks 23 which are connected to the mass 15; the mass therefore carries out strokes with multiple magnitudes of the strokes of the piston 13A. The cylinder 13 is integral with the rotating element 3. The piston-cylinder system 13, 13A is associated with a connecting rod-crank system 25, 27; the crank 27 extends as an eccentric the shaft 29 whereof is mounted on said rotating element 3 coaxially and separately from a gear wheel 31 meshing with the aforesaid ring gear 7 and with the same diameter as said ring gear 7 (which is integral with the fixed column 5). Said gear wheel 31 carries a projection 33 which is designed to come into contact with a bearing 27A coaxial with the eccentric 27 and to propel the shaft 29 of the eccentric 27 associated with said connecting rod 25.

The piston-cylinder system 13, 13A is controlled (for example through ignition of the mixture compressed in the cylinder, when a system with a heat engine is used) so as to induce the active stroke of the piston-cylinder system 13, 13A around the top dead center of said system, so that the shaft 29 of the eccentric 27 rotates anticipating the thrust produced by the projection 33, and the mass 9 carries out the amplified stroke, so that the quantity of motion thus produced is exerted through the reaction on the cylinder head 13 inducing a propulsive thrust on said movable structure 1 in the direction of displacement of said structure, that is of the vehicle. The wheel 31 continues its rotation rotating about the ring gear 7 and the projection 33 comes back into contact with the eccentric 27A to make the piston 13A carry out the return stroke (and in the case of the heat engine the compression stroke); in this phase the mass 9 also carries out the return stroke (amplified), being facilitated therein by the centrifugal effect produced by rotation of the element 3.

The amplification system of the stroke of the mass 9 can include as a whole - for each of the piston-cylinder systems 13, 13A - four rack columns 19 and four respective rack columns 23, and corresponding dual step-up gears 21.

The operation obtained with the fixed ring gear 7 and with the, or with each, gear wheel 31 (with the same diameter as the fixed ring gear 7) and with the relative projection 33, guarantees displacement of the corresponding piston 13A, to carry it at least in the return stroke (or compression stroke in the case of internal combustion engine); the active stroke of the piston-cylinder system starts - with suitable advance if required - upon reaching the top dead center, coinciding with alignment with respect to the direction of motion of the fixed structure (of the vehicle or vessel or the like); this is obtained for example with prompt ignition of the compressed mixture; therefore, the active stroke of the piston is produced promptly and hence the reaction, on the cylinder head 13 and finally on the structure 1, of the energy represented by the quantity of motion created with the mass 9 and the kinematics of the assembly associated with said mass 9.

Rotation of the element 3, produced by the transmission 9 and by the engine unit 11, is controlled by regulating the revolutions of said engine 11, which allows determination of the accelerations and decelerations of the structure 1.

It is beneficial to mention that when a piston 13A - either through explosion of the mixture or through the air pressure - slides in the cylinder 13, before overcoming the inertia of the masses it must overcome the centrifugal force and therefore oppose considerable pressures, which are the same ones that, by acting on the cylinder head, produce the displacement of the structure of the vehicle. Therefore, although it is true that the moving mass produces a quantity of motion, the centrifugal force, which may reach high values, must be added to this.

It is understood that the drawing merely shows a simplification given purely as a practical embodiment of the finding, as said finding may vary in forms and layouts without however departing from the scope of the concept on which the finding is based. Any reference numbers in the appended claims are provided to facilitate reading of the claims with reference to the description and to the drawing, and do not limit the scope of protection represented by the claims.

## Claims

1. A propulsion unit for vehicles, vessels or other applications, **characterized in that** it comprises an engine piston/cylinder system (13, 13A), associated with a mass (9) movable with respect to the structure of the vehicle, vessel or the like (1), so that the active stroke of the piston/cylinder system (13, 13A) induces a corresponding sudden displacement of said mass (9), the quantity of motion whereof produces by reaction a propulsive thrust on said structure.

2. A propulsion unit to produce thrust on a vehicle, a vessel or for other uses, **characterized in that** it comprises:
- a structure (1) movable by the effect of a series of thrusts;
- an element (3) rotating about a fixed column (5) of said movable structure (1);
- on said rotating element (3) at least a piston-cylinder engine unit (13, 13A), a mass (9) movable by the effect of the active stroke of the piston being connected to the piston (13A) thereof, in order to carry out a prompt radial stroke in respect of the column (5) and thus produce a thrust in the direction of the displacement of said structure (1);
- an eccentric connecting rod-crank (25, 27) system, the shaft (29) of which is mounted on said rotating element (3) coaxially to a gear wheel (31), meshing with a ring gear (7) with the same diameter carried by the fixed column (5);
- on said gear wheel (31) a projection (33) designed to propel the shaft (29) of the eccentric (27) associated with said connecting rod (27);
- means to trigger the active stroke of the piston-cylinder system (13, 13A) around the top dead center of said system, so that the shaft (29) of the eccentric (27) rotates suddenly anticipating the thrust produced by said projection (33) and the mass (9) carries out the amplified stroke, so that the quantity of motion thus produced induces, through the reaction on the cylinder head (13), a propulsive thrust on said movable structure in the direction of displacement thereof.

3. Propulsion unit as claimed in claim 2, **characterized in that** said piston cylinder system (13, 13A) is an internal combustion engine system.

4. Propulsion unit as claimed in claim 2, **characterized in that** said piston-cylinder system is a system supplied by fluid, in particular compressed air.

5. Propulsion unit as claimed in at least claim 2, **characterized in that** the active stroke of the piston (13A) is transmitted to the mass (9) through an amplification including racks (19, 23) and gear wheels (21) of different diameters; all also possibly multiple.

6. Propulsion unit as claimed in at least one of the previous claims, **characterized in that** at least two opposed assemblies including piston-cylinder (13, 13A), mass (9), connecting rod-crank (25, 27) and gear wheel (31) are provided on said rotating element (3), each operated promptly to produce the propulsive thrust on said structure (1).

7. Propulsion unit as claimed in claim 6, **characterized in that** it comprises at least three or four or more assemblies, each promptly operated to produce the propulsive thrust on said structure (1).

8. Propulsion unit as claimed in at least one of the previous claims, **characterized in that** it comprises regulation means of the gearmotor (11) which imposes rotation of said element (3), to accelerate and decelerate the thrust and the motion of said structure (1).

9. Propulsion unit as claimed in at least one of the previous claims, **characterized in that** when a piston (13) carries out the active stroke (through explosion of the mixture or through the air pressure) before overcoming the inertia of the masses it must overcome the centrifugal force and therefore oppose considerable pressures, which are the same ones that, by acting on the cylinder head, produce displacement of the structure of the vehicle.

10. Propulsion unit for vehicles, vessels and the like; all as described above and represented by way of example in the accompanying drawing.
